Europäisches Patentamt

European Patent Office

Office européen des brevets

(11) Numéro de publication : **0 190 592**
**B1**

## (12) FASCICULE DE BREVET EUROPÉEN

(45) Date de publication du fascicule du brevet :
07.09.88

(51) Int. Cl.⁴ : **C 21 B   5/00**, B 65 G 53/66

(21) Numéro de dépôt : **86100650.0**

(22) Date de dépôt : **18.01.86**

(54) **Procédé et installation d'injection de quantités dosées de matières pulvérulentes par voie pneumatique dans une enceinte sous pression et applicaton à un four à cuve.**

(30) Priorité : **24.01.85 LU 85738**

(43) Date de publication de la demande :
**13.08.86 Bulletin 86/33**

(45) Mention de la délivrance du brevet :
**07.09.88 Bulletin 88/36**

(84) Etats contractants désignés :
**AT BE DE FR GB IT NL SE**

(56) Documents cités :
**EP-A- 0 021 222**
**EP-A- 0 032 206**
**EP-A- 0 077 919**
**DE-B- 1 148 938**
**DE-B- 2 105 733**
**DE-B- 2 248 859**
**US-A- 3 371 917**

(73) Titulaire : **PAUL WURTH S.A.**
**32 rue d'Alsace**
**L-1122 Luxembourg (LU)**

(72) Inventeur : **Ulveling, Léon**
**30 rue Dr Jos Peffer**
**L-2319 Howald (LU)**
Inventeur : **Schmit, Louis**
**39 rue Théodore Eberhardt**
**L-1451 Luxembourg (LU)**

(74) Mandataire : **Meyers, Ernest et al**
**Office de Brevets Freylinger & Associés 46 rue du**
**Cimetière B.P. 1153**
**L-1011 Luxembourg (LU)**

## Description

La présente invention concerne un procédé et une installation d'injection de quantités dosées de matières pulvérulentes, par voie pneumatique, en plusieurs points différents, dans une enceinte se trouvant sous pression variable, à travers des voies pneumatiques alimentées en matière pulvérulente et en fluide de propulsion sous pression injecté par un surpresseur.

Quoique n'y étant pas limitée, l'invention concerne plus particulièrement un procédé d'injection de charbon en poudre dans un haut fourneau. Le problème de l'injection du combustible solide dans un haut fourneau a été résolu par le procédé et l'installation proposés dans la demande de brevet EP-A-0 021 222. L'utilisation de combustible solide, tel que du charbon ou de la lignite en poudre dans les hauts fourneaux, en remplacement des produits pétroliers, devient en effet de plus en plus intéressante, compte tenu du fait que ces derniers deviennent de plus en plus chers et de plus en plus rares. .

Toutefois, l'utilisation de la voie pneumatique pour l'injection de combustibles solides dans un haut fourneau nécessite la maîtrise d'un certain nombre de paramètres variables et liés entre eux, tout en respectant certaines conditions de départ. L'une de ces conditions est l'injection d'une quantité prédéterminée, en poids, de combustible par unité de temps dans le haut fourneau, par exemple, tant de kilos par heure, tout en assurant une répartition optimale de cette quantité sur le nombre de tuyères à travers lesquelles le combustible est injecté. C'est la raison pour laquelle ce procédé d'injection a subi un certain nombre de perfectionnements qui ont notamment fait l'objet des demandes de brevet EP-A-0 032 206 et EP-A-0 077 919.

Toutefois, certains de ces perfectionnements ont rendu ces installations plus compliquées, c'est-à-dire plus sensibles aux risques de panne et plus chères, ce qui réduit les gains espérés.

Le but de la présente invention est de prévoir un nouveau procédé et une installation d'injection de quantités dosées de matières pulvérulentes, qui est plus simple et moins vulnérable par les risques de panne.

Pour atteindre cet objectif, le procédé proposé par l'invention est essentiellement caractérisé en ce que dans chaque voie de transport, on provoque un dépôt intermédiaire de matière pulvérulente dans une trémie de dosage dans laquelle la matière pulvérulente est introduite sous une pression $P_1$, en ce que l'on extrait la matière pulvérulente à l'aide d'un courant de gaz sous une pression $P_2$ inférieure à $P_1$, en ce que l'on mesure en permanence la différence de pression $\Delta p = p_1 - p_2$, et en ce que l'on règle la pression $P_2$ de manière que la différence de pression $\Delta p$ corresponde à une quantité déterminée de matière pulvérulente entraînée par unité de temps par le courant de gaz sous pression $P_2$.

L'installation pour la mise en œuvre du procédé comprend une trémie de stockage, deux sas intermédiaires et une trémie de distribution, et est caractérisée en ce que la trémie de distribution est reliée, en série, à un certain nombre de trémies de dosage par une conduite circulaire disposée autour de ladite enceinte, et dont la dernière trémie de dosage est reliée aux sas intermédiaires, en ce que le fond de chacune des trémies de dosage est reliée d'une part par une conduite pneumatique à une conduite circulaire disposée autour de l'enceinte alimentée en gaz de propulsion par un surpresseur et d'autre part par une autre conduite pneumatique aux points d'injection dans l'enceinte, et en ce que chacune des conduites pneumatiques comporte une vanne automatique de réglage de pression commandée par un circuit de réglage associé à chacune des trémies de dosage.

L'une des particularités essentielles de l'installation pour la mise en œuvre du procédé selon l'invention est l'absence de doseurs mécaniques de la matière pulvérulente, que ce soit les doseurs classiques à rotor alvéolaire ou des doseurs plus perfectionnés. Ceci signifie, qu'à part les vannes, il n'y a plus de pièce mécanique en mouvement.

D'autres particularités et caractéristiques de l'invention seront décrites en détail à l'aide d'un exemple de mise en œuvre préféré, présenté ci-dessous, à titre d'exemple non limitatif, en référence aux figures annexées dans lesquelles :

La figure 1 montre un schéma synoptique d'une installation d'injection de combustible solide dans un four à cuve et

La figure 2 montre un schéma de réglage et de commande de l'injection associée à une trémie de dosage.

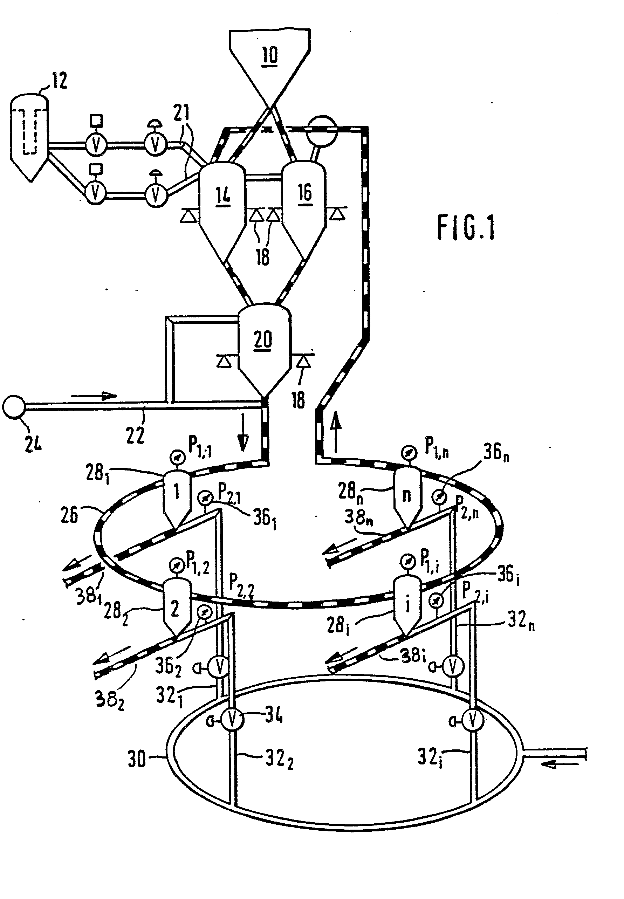

L'installation de la figure 1 comporte une trémie principale de stockage 10, associée à un filtre 12, et dont le fond communique avec deux sas intermédiaires 14 et 16 qui sont alternativement aérés et mis sous pression. L'aération est réalisée à travers des conduites 21 et le filtre 12, tandis que la pressurisation est réalisée par le retour d'une conduite circulaire décrite plus en détail ci-dessous. Chacun des sas intermédiaires 14 et 16 repose sur des pesons 18 destinés à déterminer le début et la fin de la phase de remplissage à partir de la trémie 10. Les deux sas 14 et 16 communiquent chacun avec une trémie de distribution 20, également montée sur des pesons 18 pour en mesurer le contenu.

Le combustible pulvérulent est débité de la trémie de distribution 20 dans une conduite pneumatique 22 alimentée en gaz comprimé à l'aide d'un compresseur 24 à une pression supérieure à celle régnant à l'intérieur du four. Cette conduite pneumatique 22 débouche dans une conduite circulaire 26 aménagée autour du four et traversant un certain nombre n de trémies de dosage $28_1$, $28_2$, ... $28_i$, $28_n$. Le nombre n de ces trémies de dosage 28 est de préférence proportionnel au nombre de tuyères. Après la traversée de la dernière trémie de dosage $28_n$, la conduite circulaire 26 est reliée aux sas intermédiaires 14 et 16.

Une seconde conduite circulaire 30 parallèle à la conduite 26 est également disposée autour du four. Cette conduite circulaire est alimentée en gaz comprimé à une pression supérieure à la pression régnant à l'intérieur du four, mais à une pression inférieure à la pression dans la conduite 22, et dans la conduite circulaire 26. Cette conduite circulaire d'air comprimé 30 communique à travers une série de conduites $32_1$, $32_2$, ... $32_i$, ... $32_n$, pourvues chacune d'une vanne de fermeture 34, avec les sorties de chacune des trémies de dosage 28. Ces conduites 32 comportent respectivement des vannes de régulation $36_1$, $36_2$, ... $36_i$, ... $36_n$ afin de régler la pression $P_2$ d'extraction des matières pulvérulentes des trémies 28 en fonction de la pression $P_1$ à l'entrée de ces trémies, de la manière décrite plus en détail par la suite. Les conduites 38 entraînent le combustible, à partir des sorties des trémies 28, directement vers les différentes tuyères.

Chacune des trémies 28 peut être reliée à deux points d'injection de matière pulvérulente au moyen d'une conduite 38 scindée en deux sections 38a et 38b

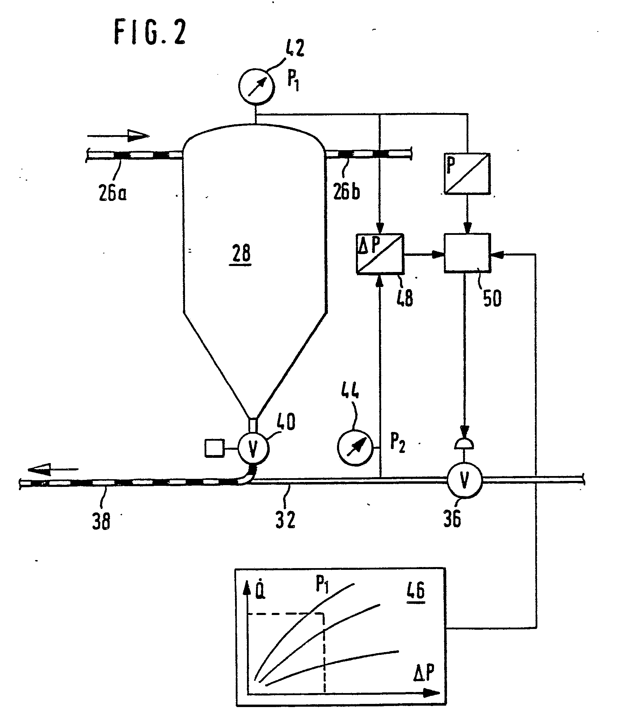

Le procédé d'injection et le fonctionnement de l'installation seront expliqués en référence aux Figures 1 et 2. Le combustible solide stocké dans la trémie 10 parvient de façon connue en soi, alternativement à travers les sas 14 et 16 dans la trémie de distribution 20 de laquelle il est extrait par le courant de gaz sous pression envoyé à travers la conduite 22 par le surpresseur 24. La pression du gaz expédié par celui-ci dans la conduite 22 est déterminée en fonction de la pression régnant à l'intérieur du four, tout en tenant compte de la perte de charge dans la conduite circulaire 26 et dans chacune des trémies de dosage 28.

Le combustible solide entraîné par le gaz comprimé à travers la conduite circulaire 26 se dépose successivement dans les différentes trémies de dosage $28_1$, $28_2$, ... $28_i$, ... $28_n$, assurant en permanence un remplissage suffisant de chacune de ces trémies.

La quantité de combustibles solides admise dans chacune des conduites $32_1$, $32_2$, ... $32_i$, ... $32_n$ par le gaz comprimé circulant dans ces conduites dépend de la différence de pression $\Delta p$ entre la pression $P_1$ dans la conduite circulaire 26 au passage d'une trémie et de la pression $P_2$ dans la conduite correspondante au passage de cette même trémie, autrement dit de la différence de pression entre l'entrée et la sortie d'une trémie de dosage. Cette quantité dépend également de la pression absolue $P_1$ à l'entrée de chacune de ces trémies, cette pression absolue diminuant progressivement depuis la première trémie $28_1$ jusqu'à la dernière trémie $28_n$.

Conformément à la présente invention, on règle dans chacune des conduites $32_1$ à $32_n$, à l'aide d'une vanne de réglage automatique $36_1$ à $36_n$ les pressions $P_2$ de l'air comprimé en fonction de ces deux paramètres de façon à absorber la quantité voulue de combustibles solides.

Ce réglage est expliqué ci-dessous en référence à la figure 2. Cette figure montre une trémie de dosage 28 avec la section amont 26a et la section aval 26b de la conduite circulaire 26. L'entrée et la sortie dans la trémie de la conduite 26 peuvent être prévues à des endroits diamétralement opposés. Lorsque la trémie 28 est remplie comme c'est le cas de la représentation de la figure 2, la matière pulvérulente amenée par la section 26a est entièrement entraînée à travers la sortie de la section 26b. Le fond de la trémie 28 communique à travers une vanne d'ouverture et de fermeture 40 avec une conduite 38 qui est reliée à une ou plusieurs tuyères d'un haut fourneau. Dans la conduite 38 débouche également la conduite 32 en provenance de la conduite circulaire 30 de gaz comprimé et destinée à entraîner la matière pulvérulente passant à travers la vanne 40.

Deux manomètres 42 et 44 mesurent respectivement la pression $P_1$ régnant dans la tête de la trémie 28 et la pression $P_2$ de l'air comprimé dans la conduite 32. Comme mentionné précédemment, la quantité de matière pulvérulente entraînée à travers la vanne 40 dépend, en position d'ouverture de celle-ci, de la pression absolue $P_1$ ainsi que de la différence de pression $\Delta p = P_1 - P_2$.

Avant la mise en service de l'installation, on détermine, par voie expérimentale, et éventuellement par interpolation informatisée, les courbes représentant la relation entre la quantité de matière pulvérulente entraînée par unité de temps et la différence de pression $\Delta p = P_1 - P_2$. Ces courbes sont en outre déterminées pour plusieurs valeurs de $P_1$, ce qui permet d'obtenir un faisceau de courbes symbolisé par le graphique 46 sur la figure 2. Ces courbes, ou les valeurs représentatives de ces courbes, sont mémorisées dans un micro-processeur.

A chaque trémie de dosage 28 est associé un circuit de régulation comprenant un dispositif 48 destiné à mesurer en permanence la différence de pression $\Delta p$ entre la pression $P_1$ et $P_2$. Le résultat de cette mesure ainsi que la valeur de la pression $P_1$ sont envoyés dans un calculateur 50 qui, sur base des informations mémorisées représentant le graphique 36, établit la différence de pression $\Delta p$ de consigne correspondant à la quantité de combustible que l'on veut injecter à travers les tuyères dans le haut fourneau. Si la différence de pression mesurée est inférieure à la différence de pression de consigne, la vanne 36 est automatiquement légèrement fermée pour réduire la pression dans la conduite 32 et augmenter ainsi la différence de pression $\Delta p$ jusqu'à ce que celle-ci soit égale à la différence de pression de consigne correspondant à la quantité prédéterminée de combustible solide. Par contre, si la différence de pression $\Delta p$ devient trop grande, la vanne 36 est ouverte davantage pour rétablir l'équilibre.

Autrement dit, le dosage du combustible solide s'effectue automatiquement par le réglage de la pression $P_2$ au moyen de la vanne 36.

## Revendications

1. Procédé d'injection de quantités dosées de matières pulvérulentes, par voie pneumatique, en plusieurs points différents, dans une enceinte se trouvant sous pression variable, à travers des voies pneumatiques alimentées en matière pulvérulente, et en fluide de propulsion sous pression injecté par un surpresseur, caractérisé en ce que dans chaque voie de transport, on provoque un dépôt intermédiaire de matière pulvérulente dans une trémie de dosage dans laquelle la matière pulvérulente est introduite sous une pression $P_1$, en ce que l'on extrait la matière pulvérulente à l'aide d'un courant de gaz sous une pression $P_2$ inférieure à $P_1$, en ce que l'on mesure en permanence la différence de pression $\Delta p = P_1 - P_2$, et en ce que l'on règle la pression $P_2$ de manière que la différence de pression $\Delta p$ corresponde à une quantité déterminée de matière pulvérulente entraînée par unité de temps par le courant de gaz sous pression $P_2$.

2. Procédé selon la revendication 1, caractérisé en ce que l'on détermine, par voie théorique ou expérimentale, une série de courbes étalon ayant comme paramètre la pression $P_1$ et établissant la relation entre la quantité horaire de matière pulvérulente injectée et la différence de pression $\Delta p$, en ce que l'on mémorise ces courbes, en ce que l'on détermine, pour chaque point d'injection la quantité requise de matière pulvérulente, en ce que l'on détermine à partir des courbes étalon la différence de pression $\Delta p$ de consigne correspondant à la quantité requise de matière pulvérulente, en ce que l'on compare, en permanence, ou à intervalles réguliers, la différence de pression mesurée à la différence de pression de consigne, et en ce que l'on règle la pression $P_2$ jusqu'à ce que cette comparaison fournisse une égalité entre la différence de pression mesuré et la différence de pression de consigne.

3. Installation pour la mise en œuvre du procédé selon l'une des revendications 1 ou 2, comprenant une trémie de stockage (10), deux sas intermédiaires (14) (16) et une trémie de distribution (20), caractérisée en ce que la trémie de distribution (20) est reliée, en série, à un certain nombre de trémies de dosage ($28_1$, $28_2$, ... $28_i$, ... $28_n$) par une conduite circulaire (26) disposée autour de ladite enceinte, et dont la dernière trémie de dosage ($28_n$) est reliée aux sas intermédiaires (14, 16), en ce que le fond de chacune des trémies de dosage ($28_1$, $28_2$, ... $28_i$, ... $28_n$) est relié d'une part par une conduite pneumatique ($32_1$, $32_2$, ... $32_i$, ... $32_n$) à une conduite circulaire (30) disposée autour de l'enceinte alimentée en gaz de propulsion par un surpresseur et d'autre part par une conduite pneumatique ($38_1$, $38_2$, ... $38_i$, ... $38_n$) aux points d'injection dans l'enceinte, en ce que chacune des conduites pneumatiques ($32_1$, $32_2$, ... $32_i$, ... $32_n$) comporte une vanne automatique de réglage de pression ($36_1$, $36_2$, ... $36_i$, ... $36_n$) commandée par un circuit de réglage associé à chacune des trémies de dosage ($28_1$, $28_2$, ... $28_i$, ... $28_n$).

4. Installation selon la revendication 3, caractérisée en ce que chaque circuit de réglage comporte un dispositif (42) de mesure de la pression $P_{1i}$ dans la tête de la trémie de dosage ($28_i$), un dispositif (44) de mesure de la pression $P_{2i}$ dans la conduite pneumatique ($32_i$) à laquelle est reliée la trémie de dosage ($28_i$), un dispositif (48) pour déterminer la différence de pression $\Delta p_i = p_{1i} - p_{2i}$, un comparateur (50) pour comparer la différence de pression $\Delta p_i$ à une différence de pression de consigne $\Delta p$ fournie par un calculateur et pour commander la vanne de réglage ($36_i$) de la pression $p_{2i}$ jusqu'à ce que la différence de pression $\Delta p_i$ mesurée soit égale à la différence de pression de consigne $\Delta p$.

5. Installation selon l'une des revendications 3 ou 4, caractérisée en ce que chaque trémie de dosage (28) est reliée à deux points d'injection de matière pulvérulente dans l'enceinte par une conduite (38) scindée en deux sections (38a) et (38b).

## Claims

1. Process for the injection of metered quantities of pulverulent materials by pneumatic means and at a plurality of different points into an enclosure which is under variable pressure, through pneumatic channels fed with pulverulent material and propulsion fluid under pressure supplied by a booster, characterized in that in each transport track an intermediate deposit of pulverulent material is provided in a proportioning hopper into which the pulverulent material is introduced at pressure $P_1$, in that the pulverulent material is extracted by means of a current of gas at a pressure $P_2$ lower than $P_1$, in that the pressure difference $\Delta p = P_1 - P_2$ is continuously measured and in that the pressure $P_2$ is set at a level which ensures that the pressure difference $\Delta p$ will correspond to a certain quantity of pulverulent material transported per unit of time by the carrier gas at a pressure $P_2$.

2. Process in accordance with claim 1, characterized in that a series of standard curves is established by either theoretical or experimental means, their parameter being the pressure $P_1$, the relationship between the hourly quantity of the pulverulent material injected and the pressure difference $\Delta p$ being determined, in that these curves are stored in a memory, in that for each injection point the required quantity of pulverulent material is determined, in that the reference pressure difference $\Delta p$ corresponding to the required quantity of pulverulent material is ascertained from the standard curves, in that the pressure difference measured is compared with the reference pressure difference continuously or at regular intervals and in that the pressure $P_2$ is regulated until the said comparison shows that the pressure difference measured is equal to the reference pressure difference.

3. Installation for the performance of the process according to any one of claims 1 or 2, comprising a storage hopper (10), two intermediate chambers (14, 16) and a distribution hopper (20), characterized in that the distribution hopper (20) is connected in series with a certain number of proportioning hoppers ($28_1$, $28_2$, ... $28_i$, ... $28_n$) via a circular pipe (26) positioned around the said enclosure, the last proportioning hopper ($28_n$) being connected to the intermediate chambers (14, 16), in that the base of each of the proportioning hoppers ($28_1$, $28_2$, ... $28_i$, ... $28_n$) is connected, on the one hand, by a pneumatic pipe ($32_1$, $32_2$, ... $32_i$, ... $32_n$) to a circular pipe (30) arranged around the enclosure fed with carrier gas by a booster, and, on the other hand, by another pneumatic pipe ($38_1$, $38_2$, ... $38_i$, ... $38_n$) to the injection points in the enclosure, and in that each of the pneumatic pipes ($32_1$, $32_2$, ... $32_i$, ... $32_n$) comprises an automatic pressure regulating valve ($36_1$, $36_2$, ... $36_i$, ... $36_n$) controlled by a regulating circuit associated with each of the proportioning hoppers ($28_1$, $28_2$, ... $28_i$, ... $28_n$).

4. Installation in accordance with claim 3, characterized in that each regulating circuit comprises a device (42) for measuring the pressure $P_{1i}$ in the head of the proportioning hopper ($28_i$), a device (44) for measuring the pressure $P_{2i}$ in the pneumatic pipe ($32_i$) to which is connected the proportioning hopper ($28_i$), a device (48) for measuring the pressure difference $\Delta p_i = P_{1i} - P_{2i}$, a comparator (50) for comparing the measured pressure difference ($\Delta p_i$) with a reference pressure difference $\Delta p$ supplied by a computer and for controlling the regulating valve ($36_i$) of the pressure $P_{2i}$ until the pressure différence $\Delta p_i$ measured is equal to the reference pressure difference $\Delta p$.

5. Installation in accordance with any one of claims 3 or 4, wherein each proportioning hopper (28) is connected by a pipe (38), subdivided into two sections (38a, 38b) to two points for the injection of pulverulent material into the enclosure.

**Patentansprüche**

1. Verfahren zum pneumatischen Einbringen dosierter Mengen pulverförmiger Stoffe, an mehreren verschiedenen Stellen, in einen unter variablem Druck stehenden Behälter durch pneumatische, mit pulverförmigem Stoff und einem unter Druck stehenden, durch einen Verdichter zugeführten Transportfluid gespeiste Transportleitungen, dadurch gekennzeichnet, dass in jeder Transportleitung ein Zwischenvorrat von pulverförmigem Stoff in einem Dosierbehälter geschaffen wird, in welchem der pulverförmige Stoff mit einem Druck $p_1$ zugeführt wird, dass der pulverförmige Stoff mit Hilfe eines Gasstromes, dessen Druck $p_2$ kleiner als $p_1$ ist, abgeführt wird, dass eine permanente Messung der Druckdifferenz $\Delta p = p_1 - p_2$ vorgenommen wird, und dass der Druck $p_2$ solcherart reguliert wird, dass die Druckdifferenz $\Delta p$ einer bestimmten, pro Zeiteinheit durch den unter dem Druck $p_2$ stehenden Gasstrom abgeführten Mengen pulverförmigen Stoffes entspricht.

2. Verfahren nach Anspruch 1, dadurch gekennzeichnet, dass man auf theoretische oder experimentelle Weise eine Anzahl Eichkurven erstellt, welche als Parameter den Druck $p_1$ haben und die Beziehung zwischen der stündlich zugeführten Menge an pulverförmigem Stoff und der Druckdifferenz $\Delta p$, dass diese Kurven gespeichert werden, dass man für jeden Zuführungspunkt die benötigte Menge pulverförmigen Stoffes bestimmt, dass man von den Eichkurven ausgehend die Solldruckdifferenz $\Delta p$ bestimmt, welche der benötigten Menge pulverförmigen Stoffes entspricht, dass man permanent oder in regelmässigen Zeitabständen die gemessene Druckdifferenz mit der Solldruckdifferenz vergleicht, und dass man den Druck $p_2$ einreguliert, bis dieser Vergleich gleiche Werte für die gemessene Druckdifferenz und die Solldruckdifferenz liefert.

3. Vorrichtung zur Durchführung des Verfahrens nach einem der Ansprüche 1 oder 2 mit einem Vorratsbehälter (10), zwei Zwischenschleusenkammern (14, 16) und einem Speisebehälter (20), dadurch gekennzeichnet, dass der Speisebehälter (20) in Reihe mit einer bestimmten Anzahl, durch eine um den genannten Behälter angeordnete Ringleitung (26) Dosierbehälter ($28_1$, $28_2$, ... $28_i$, ... $28_n$) verbunden ist, wobei der letzte Dosierbehälter ($28_n$) mit den Zwischenschleusenkammern (14, 16) verbunden ist, der Auslauf eines jeden Dosierbehälters ($28_1$, $28_2$, ... $28_i$, ... $28_n$) einerseits durch eine pneumatische Leitung ($32_1$, $32_2$, ... $32_i$, ... $32_n$) mit einer um den Behälter angeordnete, und durch einen Verdichter mit einem Transportgas gespeiste Ringleitung (30) und andererseits durch eine pneumatische Leitung ($38_1$, $38_2$, ... $38_i$, ... $38_n$) mit den Zuführungspunkten am Behälter verbunden ist, dass jede pneumatische Leitung ($32_1$, $32_2$, ... $32_i$, ... $32_n$) ein automatisches Druckregelventil ($36_1$, $36_2$, ... $36_i$, ... $36_n$) aufweist, welches von einem einem jeden der Dosierbehälter ($28_1$, $28_2$, ... $28_i$, ... $28_n$) zugeordneten Regelkreis gesteuert wird.

4. Vorrichtung nach Anspruch 3, dadurch gekennzeichnet, dass jeder Regelkreis eine Messvorrichtung (42) für den Druck $p_{1i}$ im Kopf des Dosierbehälters ($28_i$) aufweist, eine Messvorrichtung (44) für den Druck $p_{2i}$ in der pneumatischen Leitung ($32_i$), an welche der Dosierbehälter ($28_i$) angeschlossen ist, eine Vorrichtung (48) zur Bestimmung der Druckdifferenz $\Delta p_i = p_{1i} - p_{2i}$, einen Vergleicher (50) zum Vergleich der Druckdifferenz $\Delta p_i$ mit einer von einem Rechner gelieferten Solldruckdifferenz $\Delta p$ und zur Steuerung des Regelventils ($36_i$) für den Druck $p_{2i}$ bis die gemessene Druckdifferenz $\Delta p_i$ gleich ist der Solldruckdifferenz $\Delta p$.

5. Vorrichtung nach einem der Ansprüche 3 oder 4, dadurch gekennzeichnet, dass jeder Dosierbehälter (28) durch eine in zwei Abschnitte (38a und 38b) unterteilte Leitung (38) mit zwei Zuführungspunkten für den pulverförmigen Stoff in den Behälter hinein verbunden ist.

FIG.1

FIG.2